# EUROPEAN PATENT APPLICATION

(11) **EP 3 851 750 A1**
(43) Date of publication of application: **21.07.2021**
(21) Application number: 20151990.7
(22) Date of filing: 15.01.2020
(51) Int. Cl.: F24F 3/16, B01D 61/02, F24F 5/00, F25D 23/00

(54) **AIR TREATMENT UNIT AND AIR CONTROL SYSTEM**

(71) Applicant: Vestel Elektronik Sanayi ve Ticaret A.S., 45030 Manisa (TR)
(72) Inventor: OZEN, Erol, 45030 Manisa (TR)
(74) Representative: Cayli, Hülya

(57) **Abstract**

The present invention relates to an air treatment unit (1) for an air control system. The air treatment unit (1) is characterized in that the air filter unit (1) comprises at least one filter layer (10) of saline filter material (100) for receiving water from moisture contained in the air and at least one heating element (11) for vaporizing water received by the saline filter material (100). The present invention also relates to an air control system, in particular a refrigerator (2), with at least one air treatment unit (1).

## Description

### Technical Field

The invention relates to an air treatment unit for an air control system and to an air control system comprising at least one air treatment unit.

### Technological Background

Air control systems such as air conditioning systems and refrigerators control the temperature and/or the humidity of air. In particular, in a refrigerator air is cooled. To ensure clean air in the refrigerator or in the room conditioned by the air conditioning system, filters can be used. In particular, mechanical filters can be used to filter particulate contained in the air. Especially for refrigerators it is, however, also mandatory to ensure that the air is antibacterial and free of fungus. The main problem is that the air circulation in a cabinet of the refrigerator in general is inefficient. In particular, food placed into the cabinet of the refrigerator will cause bacteria or fungi to form, if the air is not sufficiently circulated. Bacteria and fungi can generate bad odor and can be harmful to human health.

Some freshness techniques and systems for refrigerators are known. For example, active ion technology, bacteria filtering, ultraviolet light excitation can be used. Generally, these systems use cooler fan, mechanic filters or chemical solutions. One freshness technique is disclosed in WO 2015/078318 A1, where an antibacterial fresh-keeping assembly and preparation method thereof is described. The antibacterial fresh-keeping assembly contains antibacterial cellulose particles, and the antibacterial cellulose particles contain 5 to 90% by mass of volatile compounds. Due to the porous structure of the porous cellulose particles, they have antibacterial fresh-keeping ingredients. The volatile compounds can be continuously released slowly into the space, so that the antibacterial fresh-keeping component can play a role of long-lasting antibacterial freshness. One disadvantage of this technique is that the contaminations in the air are not removed from the refrigerator.

### Summary of the invention

It is an object of the present invention to provide a solution for efficiently filtering air in an air control system and simultaneously improving the air quality.

The invention is based on the finding, that this problem can be solved by filtering the air using saline filter material and by physical state change of moisture contained in the air.

In a first aspect, the present invention suggests an air treatment unit for an air control system. The air treatment unit is characterized in that the air treatment unit comprises at least one filter layer of saline filter material for receiving water from moisture contained in the air and at least one heating element for vaporizing water received by the saline filter material.

The air treatment unit is an air treatment unit for an air control system. An air control system according to the present invention relates to a system for controlling the temperature and/or humidity of air. The air control system may therefore be for example an air conditioning system or a refrigerator. The air treatment unit can also be referred to as an air filter unit or filter unit. The air treatment unit serves for removing contaminations from the air and for providing improved air quality. The air treatment unit is preferably a flat unit, which means that its height is smaller than its width and depth. The air treatment unit can be detachably mounted to the air control system.

The air treatment unit is characterized in that the air treatment unit comprises at least one filter layer of saline filter material for receiving water from moisture contained in the air. Moisture denotes liquid which is diffused or condensed in the air. The liquid in the air mainly consists of water. The water of the moisture can be received by the saline filter material by being absorbed by the filter material. Alternatively, the filter material can at least partially be solved in the water of the moisture. The filter layer can be contained in a frame.

The air treatment unit comprises at least one heating element for vaporizing water received by the saline filter material. The heating element can be provided close to the filter layer or can at least partially extent into the filter layer.

By providing a saline filter material in the filter layer, water which derives from moisture in the air can efficiently be held in the filter layer. As the air treatment unit also comprises a heating element, the water thus received by the filter material can be heated and the physical state of the water can be changed from liquid water to water vapor. The water can be heated to boiling temperature or to a temperature below. The water can thus be present in the water vapor as finely dispersed liquid drops or in gaseous form. Any contaminations which were contained in the moisture will be held back in the saline filter material.

According to a preferred embodiment, the saline filter material is sodium chloride or sea salt. Sodium chloride and sea salt will hereinafter simply be referred to as salt. Sea salt may also be referred to as ocean salt. Sea salt contains in addition to sodium chloride for example calcium, potassium, and magnesium. Salt serves as an active filter material. By using salt, in particular sea salt, a natural filter material is employed. This means cleaning of the air is done purely naturally. Another advantage of using salt as filter material is that salt has antiseptic properties and can serve as a bad air trap. Thereby, the air quality of the air treated with the air treatment unit is fresh. If the air treatment unit is used in a refrigerator, freshness of the air in the cabinet of the refrigerator can be provided.

According to a preferred embodiment, the air treatment unit comprises at least one condensation element for condensation of moisture contained in the air. The condensation element preferably is a plate or sheet. The condensation element preferably has a shape and size that corresponds to the surface of the filter layer. The condensation element is preferably made of a material which has a high thermal conductivity. In particular the condensation element can be made of metal. Preferably, the condensation element is made of aluminum. The condensation element is preferably attached to or arranged adjacent to a cold source. The cold source can be separate to the air treatment unit or can be part thereof, in particular the cold side of a Peltier element. With this arrangement, condensation of moisture from the air on the condensation element can be supported.

The condensation element is preferably arranged above the filter layer.

Directions such as upwards, downwards, above and below relate to an air treatment unit mounted in an air control system such as a refrigerator and the upside is the side, where the condensation element is located.

The condensation element can be placed directly on the filter layer or can be separated from the filter layer by an additional element of the air treatment unit. In particular in the embodiment where the condensation element is provided above the filter layer, the condensation element preferably has at least one opening for passing water which accumulated on the surface of the condensation element through the condensation element downwards towards the filter layer. In a preferred embodiment, the condensation element therefore is a perforated sheet or plate.

By providing a condensation element, separation of moisture from the air can be supported. Thereby, the change of physical state of the water in the air from gaseous to liquid occurs at the condensation element and the liquid water can then be guided to the filter layer to be received therein. In particular in the embodiment, where the condensation element is attached to or arranged adjacent to a cold source, the conditions which are necessary for condensation of moisture from the air can be set. In particular, even in a refrigerator, where the air is cooled, the temperature of the condensation element can be set to be lower than the temperature of the air, thereby improving condensation of water at the condensation element.

According to one embodiment, the air treatment unit comprises at least one collecting element arranged underneath the condensation element for collecting moisture from the condensation element. The collecting element is preferably arranged adjacent to the condensation element. In particular, the collecting element is preferably in contact with the bottom side of the condensation element. The collecting element is preferably arranged between the condensation element and the filter layer. By providing a collecting element underneath the condensation element, the water which accumulates as drops on the condensation element and passes though the condensation element, can be distributed over the area of the filter element, which is provided underneath the collecting element. In addition, the collecting element can assist in guiding water which accumulates at the condensation element downwards.

According to one embodiment, the collecting element comprises at least one sponge layer. By using at least one sponge layer, the water accumulated at the condensation element can be sucked in by the collecting element, thereby supporting gravity force which already forces the water downwards.

According to one embodiment, the collecting element comprises a soft sponge layer and a hard sponge layer. The soft sponge layer is preferably facing upwards, that means that the soft sponge is adjacent to and preferably abuts the bottom surface of the condensation element.

The soft sponge layer sucks the water, in particular the water drops which form in the condensation element, in. The hard sponge layer is arranged underneath the soft sponge layer. Due to gravity, the water in the soft sponge layer is guided downwards to the hard sponge layer. Preferably the hard sponge layer has at least one sponge element, the width of which decreases in a downward direction. In one embodiment, the hard sponge layer consists of sponge elements which have an inverse triangle cone shape. Thereby, the wider side of each of the sponge elements of the hard sponge layer faces upwards and is in contact with the bottom side of the soft sponge layer. Thereby, water from the soft sponge layer is sucked in by the wider side of the sponge elements of the hard sponge layer. The water is then guided within the hard sponge layer, in particular within the sponge elements downwards to the pointy side of the sponge elements. The absorbing ability of the narrow side of the hard sponge elements for water is low. Hence, water will leave the hard sponge layer and will drip into the filter layer which is arranged underneath the hard sponge layer. The sponge elements of the hard sponge layer can be connected to each other to form a continuous layer. Alternatively, the hard sponge layer elements can be positioned and held within a further layer of the filter unit.

According to one embodiment, the air treatment unit comprises a thermal insulation enclosing the filter layer. In particular, a frame of the filter layer may be made of thermally insulating material. In addition, the bottom of the filter layer may be covered with thermally insulating material. In addition or alternatively, also the top surface of the filter layer can be covered with thermally insulating material. In the embodiment, where a collecting element is positioned on top of the filter layer, the insulating material may be included in the collecting element. For example, the hard sponge layer of the collecting element may be covered with thermally insulating material. In this case, the preferably inverse triangular hard sponge elements may be received in the upper side of a thermal insulation layer. The hard sponge elements extend over the entire height of the thermal insulation layer. By providing thermal insulation to the filter layer, the heat which is necessary to evaporate the water received in the filter layer, does not affect the surrounding area of the air filtering unit. In particular, when used in a refrigerator, the thermal insulation prevents heating of the inner chamber of the cabinet. In addition, the thermal insulation of the filter layer is also advantageous to not negatively affect a condensation element. As the temperature of the condensation element has to be lower than the temperature of the surrounding air, warming the condensation element by the heat generated within the filter layer has to be avoided.

According to one embodiment, the air treatment unit comprises at least one outlet element having at least one outlet channel. The outlet element is an element via which water and in particular water vapor can leave the filter layer. The outlet element therefore has at least one outlet channel. The channel extends from the filter layer through the thickness of the outlet element. The outlet element is preferably arranged underneath the filter layer. Preferably, the outlet element covers the entire bottom surface of the filter layer. The outlet element may be made of thermally insulating material.

When the filter layer, where water has been received from the condensation element and possibly a collecting element, is heated by the heating element, the water evaporates and water vapor is generated. The vapor will normally rise upwards. As the upper side of the filter layer is preferably covered by a collecting element and more preferably by a thermal insulation layer, the vapor is hindered from leaving the filter layer towards the top. In particular, the hard filter layer will be filled with water and prevents vapor to pass there through. Thereby, the pressure in the filter layer rises. The upper side of the filter layer, which can be formed by a thermal insulating layer and a hard sponge layer, is solid, in particular not expandable. By providing an outlet element having at least one outlet channel, a targeted exit of the water vapor can be provided. If the outlet element is provided at the bottom of the filter layer, the water vapor will therefore leave the filter layer in the downward direction due to the pressure within the filter layer.

The at least one outlet channel extending through the outlet element, preferably has an S-shape. The S-shape is preferably such that part of the outlet channel has an upward inclination. In particular, the outlet channel starting from the upper end preferably is directed downwards, followed by an upwardly direction section and terminating in a further downwardly directed section.

By providing an outlet element, a targeted release of fresh air with or without clean water, in particular water vapor, from the filter element is possible. Due to the at least one outlet channel in the outlet element, the fresh air with or without water and in particular water vapor can be forced from the filter layer downwardly and can be exhausted into the surrounding of the air treatment unit. In particular, fresh air with or without water and in particular water vapor can be exhausted into the chamber of a refrigerator. Due to the shape of the outlet channel, dripping of water or contaminations from the filter layer can be avoided. Any liquid or any particles which enter the outlet channel can be trapped in the curvature of the outlet channel.

According to one embodiment, the air treatment unit comprises at least one storage element for storing filtered air received from the filter layer. The storage element is preferably arranged at the bottom of the air treatment unit. In a preferred embodiment, the storage element is provided at the outlet element. The storage element may thus be provided at the bottom side of the outlet element. By providing a storage element, the filtered air can be output to the surrounding of the air treatment unit, when necessary. In addition, by providing a storage element in the streaming direction of the air after the outlet element, entrance of polluted air through the outlet channels of the outlet element from underneath can be avoided.

The storage element may be a container having stiff walls. In a preferred embodiment, the storage element, however, is made of flexible material. The storage element may for example comprise an elastic balloon member. By using a storage element made of flexible material, the storage element only uses up space, if air has been filtered. The storage element which comprises an elastic balloon member expands due to the pressure, which builds up within the filter layer and is passed to the storage element through outlet channels of an outlet element to which the storage element is connected. According to one embodiment, the storage element, comprises a valve. The valve can be a mechanical valve. Preferably, the valve is self-activating. In particular, the valve can be activated once the storage element is filled with filtered air and thus applies pressure on the valve.

According to a preferred embodiment, the heating element is a Peltier element. By using a Peltier element as heating element, the space required for the heating element is minimized. In addition, as the Peltier element also provides a cold side, both heating of the filter layer and cooling of the condensation element can be achieved with the same element. Thereby, the design of the air treatment unit is simplified.

The Peltier element is thus preferably provided such that the hot side extends into the filter layer and the cold side faces and preferably is in contact with the condensation element.

According to a further aspect, the present invention relates to an air control system comprising at least one air treatment unit according to the invention.

Features and advantages which have been described with respect to the air treatment unit - as far as applicable - also relate to the air control system and vice versa.

According to one embodiment, the air control system is an air conditioning system. Such air conditioning system for example may be provided at the ceiling of a room. The top side of the air treatment unit of such an air conditioning system can for example be provided at a short distance to the ceiling underneath the ceiling. Thereby, air can pass over the top surface and can for example pass a condensation element of the air treatment unit.

According to a preferred embodiment, the air control system is a refrigerator. The at least one air treatment unit is positioned in the chamber of the cabinet of the refrigerator. The air treatment is preferably detachably mounted in the refrigerator. An air treatment unit can preferably be positioned underneath a shelf and/or the top wall of the chamber of the cabinet of the refrigerator. It is however also possible, that the air treatment unit forms the shelf of the refrigerator. The position of the air treatment unit as or under a shelf or under the top wall of the chamber has the advantage, that the best point of condensation in the cabinet and spraying of fresh air to best target for example food in the refrigerator, can be achieved. In addition, the area beneath the shelves or top wall of the chamber of the refrigerator are dead points. Most of the foods or packets are located on the shelves and therefore there is always a blank spot or area under the upper shelf.

In a refrigerator colder air is circulated in the chamber of the cabinet by air fans. This colder air passes vegetables, fruit, cheese or any other organic food in the refrigerator and collects some bacteria and fungus. This causes bad smell in the refrigerator and causes faster deterioration of food. With a refrigerator according to the invention having at least one air treatment unit as defined according to the invention, such disadvantages can be avoided.

### Brief description of the drawings

The present disclosure will be more readily appreciated by reference to the following detailed description when being considered in connection with the accompanying drawings in which:
Figure 1 is a schematic perspective view of an embodiment of the air control system according to the invention;
Figure 2 is a schematic sectional view of an embodiment of the air treatment unit according to the invention; and
Figure 3 is the schematic sectional view of the embodiment according to Figure 2 during operation.

### Detailed description of preferred embodiments

In the following, the invention will be explained in more detail with reference to the accompanying figures. In the Figures, like elements are denoted by identical reference numerals and repeated description thereof may be omitted in order to avoid redundancies.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

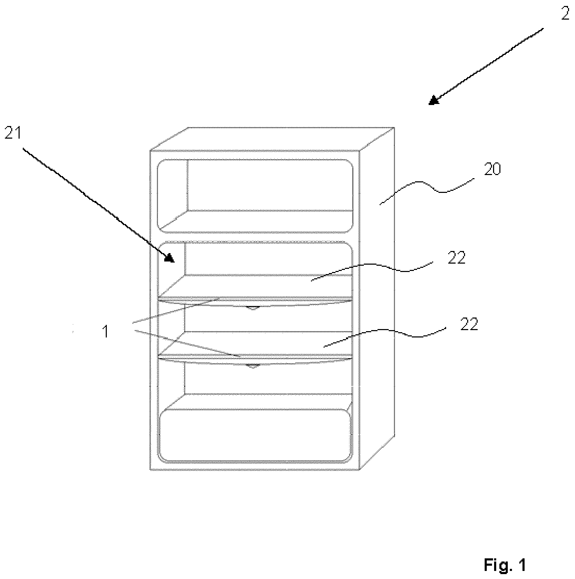

Figure 1 shows an embodiment of an air control system according to the invention. In the depicted embodiment, the air control system is a refrigerator 2. The refrigerator 2 has a cabinet 20 and a chamber 21 formed within the cabinet 20. The chamber 21 is divided by shelves 22. In Figure 1 two shelves 22 are shown. Underneath each shelf 22 an air treatment unit 1 is positioned.

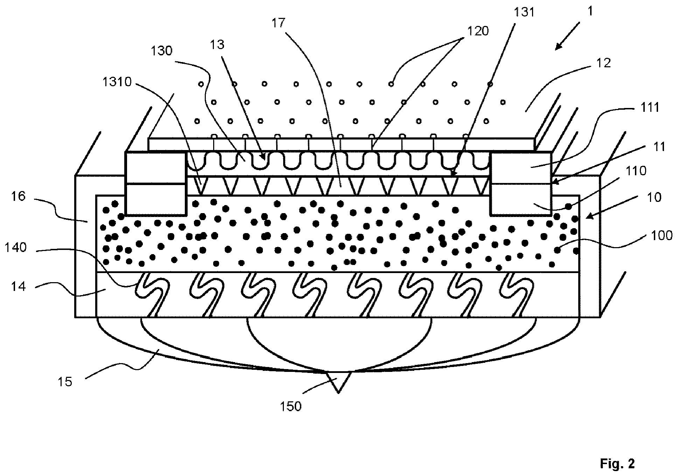

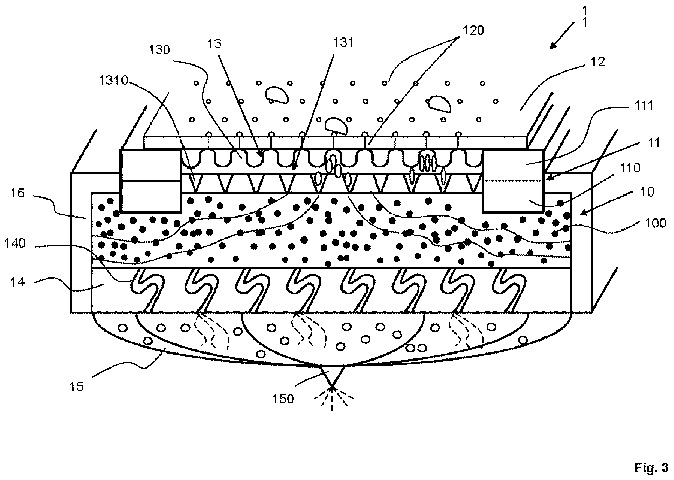

The air treatment unit 1 will now be described in more detail with respect to Figures 2 and 3. The air treatment unit 1 has a filter layer 10 consisting of saline filter material 100. The filter material 100 is preferably salt, in particular sea salt. The filter layer 10 is contained at the sides in a frame 16. The frame 16 extends over the entire height of the filter layer 10 and at the top also covers part of the top surface of the filter layer 10. Inserted into the filter layer 10 heating elements 11 are provided. In the depicted embodiment the heating elements 11 are provided at the inner edge of the frame 16. The heating elements 11 extend over the depth of the air treatment unit 1. The heating element 11 is a Peltier element. The hot side 110 extends into the filter layer 10 from the top. Between the heating elements 11 a collecting element 13 is provided. The collecting element 13 consists of a soft sponge layer 130 and a hard sponge layer 131. The hard sponge layer 131 is arrange at the top side of the filter layer 10. The hard sponge layer 131 is formed by inverse triangle cones. The hard sponge layer 131 is preferably provided with a thermal insulation layer 17. In particular, hard sponge layer 131 may be integrated into the thermal insulation layer 17 such that the wider side of the triangular shaped sponge elements 1310 lies in the top surface of the thermal insulation layer 17 and the pointy side of the triangular shaped sponge elements 1310 lies in the bottom side of the insulation layer 17.

The soft sponge layer 130 is positioned on top of the hard sponge layer 131. In the depicted embodiment, the soft sponge layer 130 has rounded channels. The collecting element 13 and the heating element 11 is covered by a condensation element 12. The condensation element 12 is a plate having perforations 120 provided over the surface. The condensation element 13 is preferably made of an aluminium sheet. The bottom of the filter layer 10 is covered by an outlet element 14. The outlet element 14 is preferably made of thermally insulating material. In the outlet element 14 outlet channels 140 are provided. The outlet channels 14 have an S-shape. Underneath the outlet element 14 a storage element 15 is provided. In the depicted embodiment, the storage element 15 is made of elastic balloon material. At the bottom end of the storage element 15 a valve 150 is provided.

The operation of the air treatment unit 1 is schematically shown in Figure 3. The chamber 21 is filled with cooled air. Once the air gets in contact with the condensation element 12. As the condensation element 12 is in contact with the cool side 111 of the heating element 11, the condensation element 12 is colder than the air within the chamber 21. Due to the contact with the colder condensation element 12, moisture within the air condensates on the condensation element 12. Also, contaminations or pollutions in the air will be trapped in the water drops which form on the condensation element 12. The water drops accumulate on the condensation element 12 and are sucked into the air treatment unit 1. In particular, the water is sucked into the soft sponge layer 130 of the collecting element 13. From the soft sponge layer 130, the water is guided to the triangular shaped hard sponge elements 1310 of the hard sponge layer 131. The water is in particular guided to the soft and hard sponge layer 130, 131 by gravitation. From the hard sponge layer 131, the water reaches the filter layer 10.

In the filter layer 10 the water mixes with the filter material 100, in particular the salt of the filter layer 10. The water-salt mixture is warmed by the heating element 11, in particular the hot side 110 of the Peltier element. Due to the heat provided by the heating element 11, the liquid-salt mixture evaporates and purified clean water leaves the filter layer 10 as clean water vapor and filtered air. The filtered air and potentially water vapor reach the S-shaped outlet channels 140. The S-shape blocks or obstructs contaminations, in particular deactivated contaminations. The purified clean water vapor fills the storage element 15. After some time, when the elastic balloon storage element 15 swells up and reaches a threshold level, the mechanic valve 150 is automatically activated. The threshold level is determined by balloon material property and the mechanic stopper valve 150. Once the valve 150 is activated, fresh air is pushed into the chamber 21 of the cabinet 20.

The present invention has a number of advantages. The air treatment unit provides an effective solution with respect to freshness filtering technology especially for refrigerators with using natural filter material such as organic ocean sea salt. Natural salt is an organic disinfector and prevents the fungal and bacterial activities. The energy consumption of the air treatment unit is limited to the energy consumption of the Peltier element. The other parts of the air treatment unit are self-activating. The air treatment unit can be removable and cleanable. The user can add salt easily after the cleaning process. A periodic cleaning interval of 3-6 months is feasible.

This invention is especially useful for refrigerators for filtering polluted air in the cabinet and providing a freshness effect for the user. The air treatment unit can also be used in an air conditioning system.

### List of reference numerals

- 1: air filter unit
- 10: filter layer
- 100: filter material
- 11: heating element
- 110: hot side
- 111: cold side
- 12: condensation element
- 120: perforation
- 13: collecting element
- 130: soft sponge layer
- 131: hard sponge layer
- 1310: sponge element
- 14: outlet element
- 140: channel
- 15: storage element
- 150: valve
- 16: frame
- 17: insulation layer
- 2: refrigerator
- 20: cabinet
- 21: chamber
- 22: shelf

## Claims

1. Air treatment unit for an air control system **characterized in that** the air filter unit (1) comprises at least one filter layer (10) of saline filter material (100) for receiving water from moisture contained in the air and at least one heating element (11) for vaporizing water received by the saline filter material (100).

2. Air treatment unit according to claim 1, wherein the saline filter material (100) is sodium chloride or sea salt.

3. Air treatment unit according to anyone of claims 1 or 2, wherein the air treatment unit (1) comprises at least one condensation element (12) for condensation of moisture contained in the air and the condensation element (12) is arranged above the filter layer (10).

4. Air treatment unit according to claim 3, wherein the air treatment unit (1) comprises at least one collecting element (13) arranged underneath the condensation element (12) for collecting moisture from the condensation element (12).

5. Air treatment unit according to claim 4, wherein the collecting element (13) comprises at least one sponge layer (130, 131).

6. Air treatment unit according to claim 5, wherein the collecting element (13) comprises a soft sponge layer (130) and a hard sponge layer (131), wherein the hard sponge layer (131) has sponge elements (1310), the width of which decreases in a downward direction for conducting the water towards the filter layer (10).

7. Air treatment unit according to anyone of claims 1 to 6, wherein the air treatment unit (1) comprises a thermal insulation enclosing the filter layer (10).

8. Air treatment unit according to anyone of claims 1 to 7, wherein the air treatment unit (1) comprises at least one outlet element (14) having at least one outlet channel (140), the outlet channel (140) has an S-shape, and the outlet element (14) is arranged underneath the filter layer (10).

9. Air treatment unit according to anyone of claims 1 to 8, wherein the air treatment unit (1) comprises at least one storage element (15) for storing filtered air received from the filter layer (10).

10. Air treatment unit according to claim 9, wherein the storage element (15) comprises an elastic balloon member and a valve (150).

11. Air treatment unit according to anyone of claims 1 to 10, wherein the heating element (11) is a Peltier element.

12. Air treatment unit according to claim 11, wherein the hot side (110) extends into the filter layer (10) and the cold side (111) faces upwards.

13. Air control system, **characterized in that** it comprising at least one air treatment unit (1) according to anyone of claims 1 to 12.

14. Air control system according to claim 13, wherein the air control system is a refrigerator (2).

15. Air control system according to claim 14, wherein the air treatment unit (1) is positioned underneath a shelf (22) of the refrigerator (2).
